# EUROPEAN PATENT SPECIFICATION

(11) **EP 4 157 808 B1**
(45) Date of publication and mention of the grant of the patent: **21.08.2024**
(21) Application number: 21726026.4
(22) Date of filing: 26.05.2021
(51) Int. Cl.: C05C 1/00, C05C 1/02, C05D 9/02, C05C 9/00, C05F 11/02, C05G 3/90

(54) **METHOD FOR THE MANUFACTURE OF AN AMMONIUM NITRATE-BASED COMPOSITION AND PRODUCTS THEREOF**
VERFAHREN ZUR HERSTELLUNG EINER ZUSAMMENSETZUNG AUF AMMONIUMNITRATBASIS UND PRODUKTE DARAUS
PROCÉDÉ POUR LA FABRICATION D'UNE COMPOSITION À BASE DE NITRATE D'AMMONIUM ET PRODUITS ASSOCIÉS

(30) Priority: 26.05.2020 EP 20176409
(43) Date of publication of application: 05.04.2023
(73) Proprietor: Yara International ASA, 0277 Oslo (NO)
(72) Inventor: LEDOUX, Francois, 95240 Cormeilles en Parisis (FR); ODU, Samuel, 4533 ET Terneuzen (NL); DURKA, Tomasz, 4535 AW Terneuzen (NL); TORRES DORANTE, Luis Omar, 48249 Dülmen (DE)
(74) Representative: De Clercq & Partners
(86) International application number: PCT/EP2021/063961
(87) International publication number: WO 2021/239764

(56) References cited:
- CA-A- 879 586
- US-A- 3 379 496
- US-A- 3 423 199
- US-A- 5 071 630
- RASULIC G M ET AL: "Application of thermal analysis to the investigation of the reaction of ammonium nitrate melt with solid zinc oxide", THERMOCHIMICA ACTA, ELSEVIER SCIENCE PUBLISHERS, AMSTERDAM, NL, vol. 148, 4 August 1989 (1989-08-04), pages 311 - 318, XP026597006, ISSN: 0040-6031, [retrieved on 19890804], DOI: 10.1016/0040-6031(89)85229-3

## Description

### Field of the invention

The present disclosure is related to a method for the manufacture of a solid, homogeneous, particulate, non-explosive composition comprising ammonium nitrate and zinc. In another aspect, the present disclosure is related to a solid, homogeneous, particulate, non-explosive composition comprising ammonium nitrate and zinc.

### Background of the invention

Ammonium nitrate (AN) is a known inorganic salt that is widely used in agriculture as fertilizer. It contains two sources of nitrogen (N), one of the most important nutrients for crops: ammonium and nitrate ions. Once the fertilizer is applied to the soil, nitrate ions are readily absorbed by plants. Ammonium may also be directly taken up by plants, but they may also be oxidized by enzymes present in the soil to form nitrates.

Crops require at least 17 nutrients to complete their life cycle, optimize yields and health. Nutrients are classified in three categories: primary macro nutrients (nitrogen, phosphorus, potassium, oxygen, carbon and hydrogen), secondary macro nutrients (calcium, magnesium and sulphur) and micronutrients (zinc, copper, manganese, molybdenum, iron, chloride, nickel and boron). To reduce the workload of farmers, it is an advantage to produce solid, particulate, non-explosive fertilizers that contain several nutrients. Typically, a fertilizers particle may contain at least one primary nutrient and at least one of secondary nutrient or micronutrient.

Zinc oxide is known source of zinc for use as fertilizer. Although zinc oxide in its natural raw material form is not water-soluble, it becomes available to crops once it is applied to soils and reacts with the environment.

There are other zinc sources for use as fertilizer which have different level of solubility (e.g. in water) such as zinc nitrate, zinc sulfate or zinc chelates. The solubility is specifically highlighted and of major relevance in micronutrient fertilizers because is a proxy for crop availability. The higher the availability i.e. in water, the faster uptake and use by crops thus to cover the nutritional demand.

Fertilizers comprising ammonium nitrate and zinc oxide are known: CN107488071 (Wang, 2017) discloses a fertilizer comprising 25 to 30 weight% of ammonium nitrate and 1 to 3 weight% of zinc oxide.

CN1388097 (Zhou, 2003) discloses a method to produce ammonium nitrate-based fertilizer where zinc sulphate and dolomite are added to an ammonium nitrate melt and the melt is subsequently granulated to obtain a solid ammonium nitrate-based composition comprising zinc. Zinc sulphate is another known source of zinc that is suitable for addition in solid fertilizers. However, the zinc content is much lower in zinc sulphate compared to zinc oxide (40 weight% compared to 80 weight%), so it requires a higher mass of the zinc source, which can create issues in the production processes. And zinc sulphate is more expensive, per unit of zinc, than zinc oxide.

Several documents of the prior art describe compositions of ammonium nitrate and zinc oxide, namely CA879586A, US5071630A, US3379496 or RASULIC G M ET AL: "Application of thermal analysis to the investigation of the reaction of ammonium nitrate melt with solid zinc oxide",THERMOCHIMICA ACTA, ELSEVIER SCIENCE PUBLISHERS, AMSTERDAM, NL, vol. 148, 4 August 1989 (1989-08-04), pages 311-318, XP026597006,ISSN: 0040-6031, DOI: 10.1016/0040-6031(89)85229-3.

So, there is a need to provide a cheaper and easier method to produce an ammonium nitrate-based fertilizer containing zinc, wherein the zinc is present in meaningful amounts for use as fertilizer and available for efficient uptake and use by crops.

### Summary of the invention

The present disclosure provides a method for the manufacture of a solid, homogeneous, particulate, non-explosive composition, comprising the steps of: a) providing an ammonium nitrate melt; b) adding zinc oxide and a filler to the ammonium nitrate melt, to obtain a melt comprising ammonium nitrate, zinc oxide and the filler; c) mixing the melt comprising ammonium nitrate, zinc oxide and the filler; d) transforming the melt obtained in step c) into a solid, homogeneous, particulate, non-explosive composition.

In particular, the present disclosure provides a method for the manufacture of a solid, homogeneous, particulate, non-explosive composition, comprising the steps of: a) providing an ammonium nitrate melt; b) adding zinc oxide and a filler compound selected from the group of limestone, dolomite, gypsum, kaolin clays and mixtures thereof to the ammonium nitrate melt, to obtain a melt comprising ammonium nitrate, zinc oxide and 10 to 30 weight% of the filler compound selected from the group of limestone, dolomite, gypsum, kaolin clays and mixtures thereof; c) mixing the melt comprising ammonium nitrate, zinc oxide and the filler compound selected from the group of limestone, dolomite, gypsum, kaolin clays and mixtures thereof; d) transforming the melt obtained in step c) into a solid, homogeneous, particulate, non-explosive composition.

In another aspect, the present disclosure provides a solid, particulate, homogeneous, non-explosive composition comprising ammonium nitrate, a zinc nitrate hydroxide complex, and a filler.

In another aspect, the present disclosure provides a solid, particulate, homogeneous, non-explosive composition comprising ammonium nitrate, a zinc nitrate hydroxide complex, and 10 to 30 weight% of a filler compound selected from the group of limestone, dolomite, gypsum, kaolin clays and mixtures thereof.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compound" refers to one or more than one compounds.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.

A homogeneous solid particle, as used herein, means that the solid particle is uniform with respect to its composition throughout the particle. An homogeneous particle may still comprise solid particles of its different components as long as the solid particles are considerably smaller than the homogeneous solid particles. In contrast, a heterogeneous particle varies in its composition throughout the particle.

The present disclosure provides a method for the manufacture of a solid, homogeneous, particulate, non-explosive composition, comprising the steps of: a) providing an ammonium nitrate melt; b) adding zinc oxide and a filler compound selected from the group of limestone, dolomite, gypsum, kaolin clays and mixtures thereof to the ammonium nitrate melt, to obtain a melt comprising ammonium nitrate, zinc oxide and 10 to 30 weight% of the filler compound selected from the group of limestone, dolomite, gypsum, kaolin clays and mixtures thereof; c) mixing the melt comprising ammonium nitrate, zinc oxide and the filler compound selected from the group of limestone, dolomite, gypsum, kaolin clays and mixtures thereof; d) transforming the melt obtained in step c) into a solid, homogeneous, particulate, non-explosive composition.

It was discovered that zinc oxide is partly transformed into one or more water-soluble compounds when added to an ammonium nitrate melt. It was discovered that at least 40% of the zinc introduced in the AN melt was transformed in a water-soluble compound. In one embodiment, 80% of the zinc introduced in the AN melt was transformed in a water-soluble compound.

Ammonium nitrate can be sold with a very high, i.e. above 90%, even above 95%, ammonium nitrate content. However due to the safety risks these compositions pose, it is highly preferred to dilute the ammonium nitrate content with one or more non-explosive compounds, for example a filler. The ammonium nitrate content can be decreased to 70 to 80 weight% and still remain an attractive fertilizer composition. Suitable fillers for addition to ammonium nitrate melts are well known in the field of fertilizer manufacturing. These fillers do not possess any explosive properties, are relatively unreactive towards ammonium nitrate and ammonium nitrate-based melts and compatible with the production process. Two of the most common fillers used in the manufacture of AN-based fertilizers are dolomite and gypsum. These two solid fillers are widely available and relatively cheap, and they both contain secondary nutrients important for crop nutrition such as calcium and magnesium for dolomite, and calcium and sulphur for gypsum. Their presence increases the agronomical value of the composition compared to AN alone. A small amount, in particular less than 20% of the filler, more in particular less than 10% of the filler, even more in particular less than 5% of the filler, may react with the ammonium nitrate melt and produce new compounds. For example, dolomite may react with the ammonium nitrate melt and produce some calcium nitrate. It may be desirable that these fillers are solids at room temperature to ensure that the melt comprising ammonium nitrate and the filler can be granulated. It may also be desirable that the filler contain elements that the crops require to increase the agronomical value of the fertilizer product. At least the filler should not comprise elements or chemicals that are toxic to plants.

In its broadest aspect, the filler, also named filler compound hereafter, is an inorganic solid particulate material, in particular an inorganic solid that is selected from the group of limestone, dolomite, gypsum, kaolin clays and mixtures thereof. Inorganic materials, such as limestone, dolomite, gypsum, kaolin clays, are widely used in the fertilizer industry as fillers in the production of solid fertilizers. Dolomite is a calcium and magnesium carbonate mineral with the formula CaMg(CO₃)₂. Gypsum is a calcium sulphate mineral with the formula CaSO₄·2H₂O. Limestone is a calcium carbonate mineral. Kaolin clays are a family of aluminum silicate compounds of the generic formula AlₘSiₙOₚ·XH₂O. Calcium and magnesium are secondary nutrients required by crops, so their introduction into an ammonium nitrate melt increases the agronomical value of the solid, particulate, homogeneous, non-explosive composition. For ease of operations, only one filler may be used in a given batch. However, it is also possible to use a mixture of at least two different fillers, in particular at least two inorganic particulate materials. When at least two fillers are used, the fillers may be premixed before being added to the ammonium nitrate melt, or they may be added separately to the melt.

The particles of the filler compound, in particular the filler compound selected from the group of limestone, dolomite, gypsum, kaolin clays and mixtures thereof, may have an average size below 200 µm, in particular below 100 µm, more in particular below 50 µm, as measured by a Camsizer optical particle measurement system. This system uses dynamic image analysis to analyze particle sizes. The filler compound selected from the group of limestone, dolomite, gypsum, kaolin clays and mixtures thereof, may be crushed on-site before being added to the melt to reach the desired size. It may be preferred to limit the size of solid particles introduced in the manufacturing method, as large particles may create problems, for example, increase viscosity of the melt, or even block pipes or tubes.

The ammonium nitrate melt may be prepared by reacting a stream of ammonia with a stream of nitric acid. One mole of ammonia reacting with one mole of nitric acid gives one mole of ammonium nitrate. The ammonium nitrate melt may also be prepared by melting solid ammonium nitrate particles, or by evaporating an aqueous solution of ammonium nitrate. The melting point of pure ammonium nitrate is 169.6 °C. However, since the melt often comprises other elements, such as water and/or impurities, it may possible to obtain a melt at a lower temperature. In one embodiment, the temperature of the melt is comprised between 160 and 170 °C. In one embodiment, the temperature of the melt is comprised between 162 and 168 °C.

The filler compound selected from the group of limestone, dolomite, gypsum, kaolin clays and mixtures thereof, and the zinc oxide may be added to the ammonium nitrate melt in different ways known in the field. One way to perform the addition is to pre-mix the filler compound, in particular the filler compound selected from the group of limestone, dolomite, gypsum, kaolin clays and mixtures thereof, with the zinc oxide and adding the mix to the melt. The two solids may also be added one after the other in no particular order.

The filler compound selected from the group of limestone, dolomite, gypsum, kaolin clays and mixtures thereof, and the zinc oxide may be added as solids to the melt, or as a suspension or solution in water or an organic solvent.

Once the filler compound selected from the group of limestone, dolomite, gypsum, kaolin clays and mixtures thereof, and the zinc oxide have been added to the melt, the melt is mixed to distribute the two solids evenly within the melt. The filler compound selected from the group of limestone, dolomite, gypsum, kaolin clays and mixtures thereof, is not soluble in the melt, so the melt is not a monophasic media, but rather a slurry. However, the filler compound selected from the group of limestone, dolomite, gypsum, kaolin clays and mixtures thereof, should be evenly distributed in the melt to ensure an efficient granulation and an identical composition of all the granules produced. The zinc oxide is partly dissolved in the melt and may react with ammonium nitrate to form one or more new compounds. The amount of zinc oxide that dissolves and reacts in the melt may depend on several factors, such as the temperature of the melt, the water content of the melt, the time spent in the melt before the granulation stage, and the presence of other compounds in the melt such as additives. From the field of ammonium nitrate explosives, it is known that zinc oxide may react with ammonium nitrate to form new zinc complexes, for example zinc amino nitrate complexes, and/or zinc nitrate hydroxide complexes. It was found out that these new zinc complexes are soluble in water and thus become easily available to crops once the solid, particulate, homogeneous, non-explosive composition is applied to soils. In one embodiment, the ammonium nitrate melt comprises zinc species, other than zinc oxide. In one embodiment, the ammonium nitrate melt comprises a zinc amino nitrate. Zinc oxide has been shown to transform into zinc amino nitrate complexes, with the general formula Zn(NH₃)ₓ(NO₃)₂, where x is comprised between 1 and 4. The zinc amino nitrate complexes may be hydrated or anhydrous.

In one embodiment, the ammonium nitrate melt comprises a zinc nitrate hydroxide complex. Zinc nitrate hydroxide complexes have the general formula: Znₘ(NO₃)ₙ(OH)ₚ, wherein n, m and p are positive integers and m = n + p. In addition, these complexes may be found in the form of anhydrous complexes or hydrated complexes. In one embodiment, it was found that the ammonium nitrate-based composition obtained after granulation of the melt comprised the following zinc complex: Zn₅(NO₃)₂(OH)₈·2H₂O. It has been previously reported (Li et al, Journal of Physical Chemistry, 116, 10325-10332) that this zinc complex is suitable for use in agriculture since its water solubility is high enough to produce aqueous solutions with high content of dissolved zinc.

The melt comprising ammonium nitrate, the filler compound selected from the group of limestone, dolomite, gypsum, kaolin clays and mixtures thereof, and zinc oxide is mixed to achieve an homogeneous distribution of the filler compound selected from the group of limestone, dolomite, gypsum, kaolin clays and mixtures thereof, and the zinc oxide throughout the melt. In one embodiment, the melt is mixed between 10 to 30 min.

Once the melt is mixed, it is sent to the transformation stage. This stage may also be referred to as the particulation or granulation stage. A number of processes are known to transform a melt into solid particles, such as fluidized bed granulation, pan granulation, drum granulation, prilling tower, spherodizer and more. The choice of the granulation technique may be done based on the technical characteristics desired for the final solid, particulate composition. All the transformation techniques, such as granulation and prilling, produce solid compositions with variable physical characteristics such as particle strength, dustiness, average size, size distribution. They also require a different investment and occur variable operating costs.

Once the solid, particulate ammonium nitrate-based composition is obtained, some particles are analyzed in a detonation test to ensure that these particles are not explosive and safe for transport and handling. A number of procedures have been developed to test whether ammonium nitrate-based compositions are explosive. An example of such a test is called a denting test: the particles are put through five thermal cycles where they are heated up to 50 °C then cooled to 25 °C. The particles are then mixed with TNT in a TNT/fertilizer ratio of 1/2 to 1/5 and a detonation test is performed with the mixture on a steel plate. The test results are measured by the damage done to the steel plate and may be categorized in four different levels from 1 for very high explosion risk, to 4 for "composition cannot detonate". The product obtained by the method described herein consistently achieves a 4 on the denting test.

In one embodiment, from 0.01 to 5.0 weight% of zinc oxide, based on the total weight of the melt after addition of zinc oxide and the filler compound selected from the group of limestone, dolomite, gypsum, kaolin clays and mixtures thereof, is added to the melt comprising ammonium nitrate in step b), in particular from 0.01 to 2.0 weight%, more in particular from 0.05 to 1.0 weight% of zinc oxide.

The amount of zinc oxide may be adjusted based on the targeted content of the solid particulate composition. Zinc is a micronutrient, so most crops do not require a large amount of the element. The typical requirement for a crop may range from 20 to 100 mg/kg of dry matter. To provide this amount, it is recommended to apply between 1 and 100 kg of zinc per hectare of crop. It was found out that a zinc oxide content between 0.01 and 5.0 weight% of the total weight of the melt was enough to obtain a satisfactory solid composition. Zinc oxide contains 80 weight% of zinc. In one embodiment, the zinc oxide added to the melt is a micronized source of zinc oxide, i.e. at least 95% of the particles have an average diameter below 100 µm. It was found out that using a micronized source of zinc improves the water solubility of the zinc present in the solid composition.

In one embodiment, from 10 to 30 weight% of the filler compound selected from the group of limestone, dolomite, gypsum, kaolin clays and mixtures thereof, based on the total weight of the melt after the addition of zinc oxide and the filler compound selected from the group of limestone, dolomite, gypsum, kaolin clays and mixtures thereof, is added to the melt comprising ammonium nitrate, in particular from 15 to 25 weight%, more in particular from 19 to 25 weight% of the filler compound selected from the group of limestone, dolomite, gypsum, kaolin clays and mixtures thereof. The filler compound selected from the group of limestone, dolomite, gypsum, kaolin clays and mixtures thereof, should be added in a sufficient amount as to significantly reduce the explosive risks of the ammonium nitrate-based solid composition. However, adding too much filler would reduce the nutritional content of the final product and is not desirable. It was found out that a filler content between 10 and 30 weight% is a good compromise between safety and agronomical value.

In one embodiment, the melt comprising ammonium nitrate provided in step a) comprises water, in particular from 1 to 10 weight% of water, more in particular from 2 to 7 weight% of water. An ammonium nitrate melt always contains water to ensure that the melt has a good flowability and it is possible to transport the melt across the production plant. However, too much water is not desirable as it lowers the ammonium nitrate content of the melt and requires a lot of energy to remove the water content before the granulation stage. During the production stages, an ammonium nitrate melt typically comprises between 1 and 10 weight% of water. In one embodiment, the melt comprises from at least 1 to at most 10 weight% of water. In one embodiment, the melt comprises between 2 and 7 weight% of water. In one embodiment, the melt comprises from at least 2 to at most 7 weight% of water.

In one embodiment, an aluminum sulphate is added to the ammonium nitrate melt. In one embodiment, the aluminum sulphate is added in step b) of the method according to the present disclosure. Aluminum sulphate is a granulation additive and may be added as an anhydrous or hydrate compound. In one embodiment, aluminum sulphate heptadecahydrate (Al₂(SO₄)₃·17H₂O) is added to the ammonium nitrate melt. Aluminum sulphate heptadecahydrate is commercially available in a crystalline form which facilitates its use in a production plant. When aluminium sulphate is added to the ammonium nitrate melt, it was observed that the amount of zinc immediately available to crops was somewhat reduced compared to compositions where aluminium sulphate was not present. It is envisaged that zinc oxide and aluminium sulphate may react with each other, and optionally the ammonium nitrate melt, and form a zinc-aluminium complex, which may not be water soluble.

In one embodiment, an amount of aluminum sulphate is added to the ammonium nitrate melt, such that the melt comprises from 0.1 to 5.0 weight% of aluminum sulphate when the melt is transformed into solid, homogeneous particles. In one embodiment, the melt may comprise from 0.1 to 2.5 weight%, more in particular from 0.2 to 1.5 weight%, even more in particular from 0.5 to 1.5 weight% of aluminum sulphate. The aluminum sulphate may be added with the filler compound selected from the group of limestone, dolomite, gypsum, kaolin clays and mixtures thereof, and zinc oxide, but it may also be added to the melt at another stage in the production process, for example just before the granulation step.

In one embodiment, magnesium nitrate is added to the ammonium nitrate melt. In one embodiment, the magnesium nitrate is added in step b) of the method according to the present disclosure. Magnesium nitrate (Mg(NO₃)₂) is a granulation additive and may be purchased from commercial vendors or prepared by reacting magnesium oxide with nitric acid. When a plant producing an ammonium nitrate production unit, it may comprise a nitric acid production unit. Part of the nitric acid produced therein may be used to produce magnesium nitrate.

In one embodiment, an amount of magnesium nitrate is added to the ammonium nitrate melt, such that the melt comprises from 0.1 to 5.0 weight% of magnesium nitrate when the melt is transformed into solid, homogeneous particles. In one embodiment, the melt may comprise from 0.1 to 2.5 weight%, more in particular from 0.2 to 1.5 weight%, even more in particular from 0.5 to 1.5 weight% of magnesium nitrate. The magnesium nitrate may be added with the filler compound selected from the group of limestone, dolomite, gypsum, kaolin clays and mixtures thereof, and zinc oxide, but it may also be added to the melt at another stage in the production process, for example just before the granulation step.

In one embodiment, one further source of nutrients is added to the ammonium nitrate melt. The nutrient may be selected from the group of the known crop nutrients: nitrogen, phosphorus, potassium, calcium, magnesium, sulphur, zinc, copper, manganese, molybdenum, iron, chloride, nickel and boron. In one embodiment, the ammonium nitrate melt comprises one or more selected from the group of colemanite, ulexite, zinc borate, boric acid, manganese oxide.

In one embodiment, the method according to the present disclosure comprises the step of heating up the melt obtained in step c). It may be necessary to adjust the water content of the melt before the transformation/granulation step. Each type of granulation requires a melt with a specific water content to operate in an optimal manner. This water content may be lower than the rest of the production processes and thus needs to be adjusted just before the final stage.

In one embodiment, step d) is performed on a melt comprising from 2 to 4 weight% of water. For several granulation techniques, e.g. fluidized bed granulation, a water content between 2 and 4 weight% is recommended.

In one embodiment, the method according to the present disclosure further comprises step applying a conditioning agent to the particles obtained in step d). Fertilizer particles have to endure long transport and storage times before being used in the fields. They may also be exposed to environments with high humidity. It is important for the particles to retain their physical properties until the field application, otherwise the field application, for example with a spreader, will not be even or regular. A common method in the field of fertilizer particles is to add a conditioning agent to the particles to improve their properties and maintain them during a long period of time. The conditioning agent may have several effects, such as anti-caking, moisture-repellent and/or reducing dust formation.

In one embodiment, the conditioning agent comprises a non-polar material, in particular a liquid organic material, such as an oil, wax, resin or the like and any mixture thereof and an alkyl phosphate ester. In one embodiment, the conditioning agent comprises a wax, in particular a paraffin wax or an hydrocarbon wax, and an alkyl phosphate ester. In one embodiment, the conditioning agent comprises a wax, in particular a paraffin wax or an hydrocarbon wax, an alkyl phosphate ester and a mixture of amines, in particular a mixture of primary amines, such as octadecylamine, and hexadecylamine. It was found that such a conditioning agent has a positive impact on

In one embodiment, the composition comprises a conditioning agent at a level of 0.0001 to 1.0 weight%, in particular 0.02 to 0.5 weight%, more in particular 0.05 to 0.2 weight%, relative to the total weight of the composition.

In another aspect, the present disclosure provides a solid, particulate, homogeneous, non-explosive composition comprising ammonium nitrate, a zinc nitrate hydroxide complex, and 10 to 30 weight% of a filler compound selected from the group of limestone, dolomite, gypsum, kaolin clays and mixtures thereof. It is known that zinc nitrate hydroxide complexes are suitable sources of zinc for agricultural uses. These complexes may be obtained by reacting zinc oxide with zinc nitrate, or zinc nitrate with sodium hydroxide. The present disclosure also discloses the preparation of these complexes by adding zinc oxide to an ammonium nitrate melt. The composition may also comprise zinc complexes, other than zinc oxide and zinc nitrate hydroxide complexes, resulting from the reaction or decomposition of zinc oxide in the melt or in the solid composition. For example, it is known that the addition of zinc oxide to an ammonium nitrate melt may lead to the formation of zinc amino nitrate complexes with the general formula Zn(NH₃)ₓ(NO₃)₂, where x is comprised between 1 and 4.

As used herein, a solid, particulate, homogeneous, non-explosive composition refers to a composition comprising solid, and homogeneous particles that are non-explosive. As used herein, homogeneous particles refer to particles that may contain several components homogeneously distributed within each particle. The particles may not necessarily be monophasic, i.e. they may contain chemical compounds in different states. For example, a particle according to the present disclosure may comprise solids of different chemical compositions, wherein the average size of the solids is much smaller than the average size of the particle. Such a particle would be considered homogeneous for the purpose of this disclosure if the solids are equally distributed within the particle.

The composition also comprises ammonium nitrate as the main nutrient source and a filler compound, in particular the filler compound selected from the group of limestone, dolomite, gypsum, kaolin clays and mixtures thereof, which also may contain a nutrient source, such as calcium, magnesium and/or sulphur. However, providing nutrients is not the main benefit that is sought after by the addition of a compound selected from the group of limestone, dolomite, gypsum, kaolin clays and mixtures thereof. The composition provides at least two nutrients, nitrogen and zinc, in the form of water-soluble sources that may be taken up immediately by crops. Zinc is absorbed mainly as Zn²⁺ by plants, so when zinc oxide is applied as such to crops, it must first be transformed into a Zn²⁺ form, which delays its absorption by the crops. However, it was also observed that crop roots can immobilize insoluble nutrients, such as zinc oxide, which are then transformed into soluble compounds by the environment (e.g. bacteria, enzymes, etc.). The solid, particulate composition according to the invention comprises different particles, for example, particles of ammonium nitrate and particles of the filler compound selected from the group of limestone, dolomite, gypsum, kaolin clays and mixtures thereof. The solid, particulate composition according to the present disclosure are considered homogeneous when the solid, particulate composition is generally uniform with respect to its composition throughout the particle.

In one embodiment, the solid, particulate, homogeneous, non-explosive composition comprises zinc oxide. It was observed that the composition may comprise some remaining zinc oxide that did not react with the ammonium nitrate melt. It is known that zinc comprised in zinc oxide is eventually absorbed by the crops, so it is not required to convert 100% of the zinc oxide to a water-soluble zinc form.

The solid, particulate, homogeneous, non-explosive composition is obtained from the method disclosed in the present document. The method as disclosed herein produces a solid, particulate, homogeneous, non-explosive composition comprising ammonium nitrate, a zinc nitrate hydroxide complex, and 10 to 30 weight% of a compound selected from the group of limestone, dolomite, gypsum, kaolin clays and mixtures thereof.

The inorganic filler is selected from the group of dolomite, gypsum, limestone, kaolin clays and mixtures thereof.

In one embodiment, the composition comprises at least 50 weight%, in particular at least 60 weight%, more in particular at least 70 weight% of ammonium nitrate. It may be desirable that the composition comprises a minimum amount of ammonium nitrate to be relevant for an agricultural use. It was found out that the composition may at least comprise 50 weight% of ammonium nitrate. Alternatively, the composition may comprise at least 60 weight%, in particular at least 70 weight% of ammonium nitrate.

In one embodiment, the composition comprises 0.01 to 5.0 weight%, in particular 0.01 to 2.0 weight%, more in particular 0.05 to 1.0 weight% of zinc. Since crops usually do not require a high amount of zinc, it is not necessary for the composition to comprise too much zinc as this would decrease the agronomical and commercial value of the composition. It was found out that an amount of zinc between 0.01 and 5.0 weight% is suitable for most applications. The zinc may be present under different forms or complexes in the solid, particulate composition.

In one embodiment, the composition comprises 10 to 30 weight%, in particular 15 to 25 weight%, of the filler compound selected from the group of limestone, dolomite, gypsum, kaolin clays and mixtures thereof. The main role of the filler compound selected from the group of limestone, dolomite, gypsum, kaolin clays and mixtures thereof, is to decrease the explosive risk of the ammonium nitrate-based composition to facilitate its handling. The filler compound selected from the group of limestone, dolomite, gypsum, kaolin clays and mixtures thereof, may also improve the physical properties of the solid, particulate non-explosive composition, such as dustiness or hardness. It was found that a content between 10 and 30 weight% of the filler compound selected from the group of limestone, dolomite, gypsum, kaolin clays and mixtures thereof, was enough to achieve this goal. In one embodiment, the composition comprises 21 weight% of dolomite. In one embodiment, the composition comprises 24.5 weight% of gypsum and 3 weight% of dolomite. In one embodiment, the composition comprises 15 weight% of gypsum and 5 weight% of dolomite.

In one embodiment, the solid, particulate, homogeneous, non-explosive composition comprises zinc diamino nitrate and/or zinc tetraamino nitrate. It is known that when zinc oxide reacts with ammonium nitrate at high temperature, it may form one or more zinc amino nitrate complex. Two of these complexes are known: zinc diamino nitrate with the formula Zn(NH₃)₂(NO₃)₂ and zinc tetraamino nitrate Zn(NH₃)₄(NO₃)₂. It is not clear what kind of conditions leads to the formation of one complex or the other.

In one embodiment, the composition comprises magnesium and/or aluminum. In one embodiment, the composition comprises a compound selected from the group of aluminum sulphate, magnesium nitrate and mixtures thereof. The composition may comprise additional elements other than nitrogen, and zinc. These elements may come from additives used in the granulation process. Aluminum sulphate and magnesium nitrate are well-known production additives in ammonium nitrate melts.

The composition comprises a zinc nitrate hydroxide complex, in particular Zn₅(NO₃)₂(OH)₈.2H₂O. It is thought that zinc oxide may react with ammonium nitrate to produce a zinc nitrate hydroxide complex.

In one embodiment, the composition comprises from 0.1 to 5.0 weight%, in particular from 0.1 to 2.5 weight%, more in particular from 0.2 to 1.5 weight%, even more in particular from 0.5 to 1.5 weight% of one of magnesium nitrate and aluminum sulphate.

In one embodiment, the composition comprises at least 70 weight% of ammonium nitrate, 0.1 to 1.0 weight% of a zinc nitrate hydroxide complex, and 20 to 25 weight% of dolomite.

In one embodiment, the composition comprises one further source of nutrients. The nutrient may be selected from the group of the known crop nutrients: nitrogen, phosphorus, potassium, calcium, magnesium, sulphur, zinc, copper, manganese, molybdenum, iron, chloride, nickel and boron. In one embodiment, the solid, particulate, homogeneous, non-explosive composition comprises one or more selected from the group of colemanite, ulexite, zinc borate, boric acid, manganese oxide.

In another aspect, the present disclosure is related to the use of the solid, particulate, homogeneous, non-explosive composition according to the present disclosure as a fertilizer, in particular in zinc-deficient soils.

### Example

An ammonium nitrate melt comprising 5 to 6 weight% of water and more than 90 weight% of ammonium nitrate was heated up to 165 °C and directed to a mixing tank. For each 100 kg of melt, 27.2 kg of dolomite, about 900 g of magnesium nitrate and 325 g of zinc oxide were added to the tank and the melt was mixed for 10 to 30 min before being granulated in a fluidized bed granulator. The final product comprised 76.8 weight% of ammonium nitrate, 21 weight% of dolomite, 0.9 weight% of magnesium nitrate and 0.25 weight% of Zn (as expressed as zinc oxide). The zinc content of the final product was analyzed by sequential analytical extraction, a modified EU Method 3.1 in the "Regulation (EC) No 2003/2003 of The European Parliament and of The Council of 13 October 2003 relating to fertilizers, modified for zinc extraction. This extraction method can be carried out from the same sample resembling different soil fractions or pools are relevant to crop uptake differing in availability and time. The sequential extractions consist of: water as an indicator for immediate and quick availability, neutral aqueous ammonium citrate as indicator for moderately availability in time and aqueous 2% citrate for long-term availability. The addition of the three portions should be equal to 100%. It was shown that more than 80% of the zinc content of the particles were found to be readily available to plants (water extraction) and about 15% of the total zinc content was found to be moderately available (neutral aqueous ammonium citrate). The particles were analyzed by X-ray diffraction, and the complex Zn₅(NO₃)₂(OH)₈.2H₂O was found to be the major zinc complex in the particles. The particles may contain other zinc complexes, but it was not possible to identify other complexes with this method.

Comparative examples were produced starting from an ammonium nitrate melt comprising 21 weight% of dolomite. First, zinc oxide was added just before the granulation step: extraction analysis showed that only 38% of the zinc was readily available to the crops, and a further 27% moderately available. In another example, the melt was granulated without the zinc, and zinc oxide was applied as a coating with an oil-based composition. Extraction analysis showed 42% of the zinc readily available and 36% as moderately available. The addition of zinc oxide to the melt improves drastically the availability of the zinc to crops.

## Claims

1. Method for the manufacture of a solid, homogeneous, non-explosive particulate composition, comprising the steps of:
a) providing an ammonium nitrate melt;
b) adding zinc oxide and a compound selected from the group of limestone, dolomite, gypsum, kaolin clays and mixtures thereof, to the ammonium nitrate melt, to obtain a melt comprising ammonium nitrate, zinc oxide and 10 to 30 weight% of the compound selected from the group of limestone, dolomite, gypsum, kaolin clays and mixtures thereof;
c) mixing the melt comprising ammonium nitrate, zinc oxide and the compound selected from the group of limestone, dolomite, gypsum, kaolin clays and mixtures thereof;
d) transforming the melt obtained in step c) into a solid, homogeneous, particulate composition.

2. Method according to claim 1, wherein from 0.01 to 5.0 weight% of zinc oxide, based on the total weight of the melt after addition of zinc oxide and the compound selected from the group of limestone, dolomite, gypsum, kaolin clays and mixtures thereof, is added to the melt comprising ammonium nitrate in step b), in particular from 0.01 to 2.0 weight%, more in particular from 0.05 to 1.0 weight% of zinc oxide.

3. Method according to any one of claims 1 to 2, wherein the melt obtained in step b) comprises from 15 to 25 weight%, more in particular from 19 to 25 weight% of the compound selected from the group of limestone, dolomite, gypsum, kaolin clays and mixtures thereof.

4. Method according to any one of claims 1 to 3, wherein the melt comprising ammonium nitrate provided in step a) comprises water, in particular from 1 to 10 weight% of water, more in particular from 2 to 7 weight% of water.

5. Method according to any one of claims 1 to 4, wherein the method comprises the step of heating up the melt obtained in step c).

6. Method according to any one of claims 1 to 5, wherein step d) is performed on a melt comprising from 2 to 4 weight% of water.

7. A solid, particulate, homogeneous, non-explosive composition comprising ammonium nitrate, a zinc nitrate hydroxide complex, and 10 to 30 weight% of a compound selected from the group of limestone, dolomite, gypsum, kaolin clays and mixtures thereof.

8. The solid, particulate, homogeneous, non-explosive composition according to claim 7 prepared by the method according to any one of claims 1 to 6.

9. The solid, particulate, homogeneous, non-explosive composition according to claim 7 or 8, wherein the composition comprises at least 50 weight%, in particular at least 60 weight%, more in particular at least 70 weight% of ammonium nitrate.

10. The solid, particulate, homogeneous, non-explosive composition according to any one of claims 7 to 9, wherein the composition comprises 0.01 to 5.0 weight%, in particular 0.01 to 2.0 weight%, more in particular 0.05 to 1.0 weight% of the zinc nitrate hydroxide complex.

11. The solid, particulate, homogeneous, non-explosive composition according to any one of claims 7 to 10, wherein the composition comprises 15 to 25 weight%, more in particular 18 to 25 weight% of the compound selected from the group of limestone, dolomite, gypsum, kaolin clays and mixtures thereof.

12. The solid, particulate, homogeneous, non-explosive composition according to any one of claims 7 to 11, wherein the zinc nitrate hydroxide complex is Zn₅(NO₃)₂(OH)₈.2H₂O.

13. The solid, particulate, homogeneous, non-explosive composition according to any one of claims 7 to 12, wherein the composition comprises at least 70 weight% of ammonium nitrate, 0.1 to 1.0 weight% of a zinc nitrate hydroxide complex, and 20 to 25 weight% of dolomite.

14. Use of the solid, particulate, homogeneous, non-explosive composition as defined in any one of claims 7 to 13 as a fertilizer, in particular for use in zinc-deficient soils.

## Patentansprüche

1. Verfahren zur Herstellung einer festen, homogenen, nicht explosionsfähigen, partikelförmigen Zusammensetzung, umfassend die Schritte:
a) Bereitstellen einer Ammoniumnitratschmelze;
b) Zugeben von Zinkoxid und einer Verbindung ausgewählt aus der Gruppe von Kalkstein, Dolomit, Gips, Kaolin-Tonen und Gemischen davon zu der Ammoniumnitratschmelze, um eine Schmelze zu erhalten, die Ammoniumnitrat, Zinkoxid und 10 bis 30 Gew.-% an der Verbindung ausgewählt aus der Gruppe von Kalkstein, Dolomit, Gips, Kaolin-Tonen und Gemischen davon umfasst;
c) Mischen der Schmelze, die Ammoniumnitrat, Zinkoxid und die Verbindung ausgewählt aus der Gruppe von Kalkstein, Dolomit, Gips, Kaolin-Tonen und Gemischen davon umfasst;
d) Umwandeln der bei Schritt c) erhaltenen Schmelze in eine feste homogene partikelförmige Zusammensetzung.

2. Verfahren gemäß Anspruch 1, wobei bei Schritt b) von 0,01 bis 5,0 Gew.-% Zinkoxid, bezogen auf das Gesamtgewicht der Schmelze nach Zugabe von Zinkoxid und der Verbindung ausgewählt aus der Gruppe von Kalkstein, Dolomit, Gips, Kaolin-Tonen und Gemischen davon zu der Schmelze, die Ammoniumnitrat umfasst, zugegeben werden, insbesondere von 0,01 bis 2,0 Gew.-%, spezieller von 0,05 bis 1,0 Gew.-%, Zinkoxid.

3. Verfahren gemäß einem der Ansprüche 1 bis 2, wobei die bei Schritt b) erhaltene Schmelze von 15 to 25 Gew.-%, spezieller von 19 bis 25 Gew.-%, an der Verbindung ausgewählt aus der Gruppe von Kalkstein, Dolomit, Gips, Kaolin-Tonen und Gemischen davon umfasst.

4. Verfahren gemäß einem der Ansprüche 1 bis 3, wobei die bei Schritt a) bereitgestellte Schmelze, die Ammoniumnitrat umfasst, Wasser, insbesondere von 1 bis 10 Gew.-% Wasser, spezieller von 2 bis 7 Gew.-% Wasser, umfasst.

5. Verfahren gemäß einem der Ansprüche 1 bis 4, wobei das Verfahren den Schritt des Erhitzens der bei Schritt c) erhaltenen Schmelze umfasst.

6. Verfahren gemäß einem der Ansprüche 1 bis 5, wobei Schritt d) an einer Schmelze durchgeführt wird, die von 2 bis 4 Gew.-% Wasser umfasst.

7. Feste, partikelförmige, homogene, nicht explosionsfähige Zusammensetzung umfassend Ammoniumnitrat, einen Zinknitrat-Hydroxid-Komplex und 10 bis 30 Gew.-% an einer Verbindung ausgewählt aus der Gruppe von Kalkstein, Dolomit, Gips, Kaolin-Tonen und Gemischen davon.

8. Feste, partikelförmige, homogene, nicht explosionsfähige Zusammensetzung gemäß Anspruch 7, hergestellt durch das Verfahren gemäß einem der Ansprüche 1 bis 6.

9. Feste, partikelförmige, homogene, nicht explosionsfähige Zusammensetzung gemäß Anspruch 7 oder 8, wobei die Zusammensetzung wenigstens 50 Gew.-%, insbesondere wenigstens 60 Gew.-%, spezieller wenigstens 70 Gew.-%, Ammoniumnitrat umfasst.

10. Feste, partikelförmige, homogene, nicht explosionsfähige Zusammensetzung gemäß einem der Ansprüche 7 bis 9, wobei die Zusammensetzung 0,01 bis 5,0 Gew.-%, insbesondere 0,01 bis 2,0 Gew.-%, spezieller 0,05 bis 1,0 Gew.-%, an dem Zinknitrat-Hydroxid-Komplex umfasst.

11. Feste, partikelförmige, homogene, nicht explosionsfähige Zusammensetzung gemäß einem der Ansprüche 7 bis 10, wobei die Zusammensetzung 15 bis 25 Gew.-%, spezieller 18 bis 25 Gew.-%, an der Verbindung ausgewählt aus der Gruppe von Kalkstein, Dolomit, Gips, Kaolin-Tonen und Gemischen davon umfasst.

12. Feste, partikelförmige, homogene, nicht explosionsfähige Zusammensetzung gemäß einem der Ansprüche 7 bis 11, wobei der Zinknitrat-Hydroxid-Komplex Zn₅(NO₃)₂(OH)₈.2H₂O ist.

13. Feste, partikelförmige, homogene, nicht explosionsfähige Zusammensetzung gemäß einem der Ansprüche 7 bis 12, wobei die Zusammensetzung wenigstens 70 Gew.-% Ammoniumnitrat, 0,1 bis 1,0 Gew.-% an einem Zinknitrat-Hydroxid-Komplex und 20 bis 25 Gew.-% Dolomit umfasst.

14. Verwendung der festen, partikelförmigen, homogenen, nicht explosionsfähigen Zusammensetzung wie in einem der Ansprüche 7 bis 13 definiert als Düngemittel, insbesondere zur Verwendung in zinkarmen Böden.

## Revendications

1. Procédé pour la fabrication d'une composition solide particulaire homogène non explosive, comprenant les étapes consistant à :
a) fournir une masse fondue de nitrate d'ammonium ;
b) ajouter de l'oxyde de zinc et un composé choisi dans le groupe consistant en la pierre calcaire, la dolomite, le gypse, les argiles kaoliniques et les mélanges de ceux-ci à la masse fondue de nitrate d'ammonium, pour obtenir une masse fondue comprenant du nitrate d'ammonium, de l'oxyde de zinc et 10 à 30 % en poids du composé choisi dans le groupe consistant en la pierre calcaire, la dolomite, le gypse, les argiles kaoliniques et les mélanges de ceux-ci ;
c) mélanger la masse fondue comprenant du nitrate d'ammonium, de l'oxyde de zinc et le composé choisi dans le groupe consistant en la pierre calcaire, la dolomite, le gypse, les argiles kaoliniques et les mélanges de ceux-ci ;
d) transformer la masse fondue obtenue à l'étape c) en une composition solide particulaire homogène.

2. Procédé selon la revendication 1, dans lequel de 0,01 à 5,0 % en poids d'oxyde de zinc, sur la base du poids total de la masse fondue après l'ajout d'oxyde de zinc et du composé choisi dans le groupe consistant en la pierre calcaire, la dolomite, le gypse, les argiles kaoliniques et les mélanges de ceux-ci, est ajouté à la masse fondue comprenant du nitrate d'ammonium à l'étape b), en particulier de 0,01 à 2,0 % en poids, plus particulièrement de 0,05 à 1,0 % en poids d'oxyde de zinc.

3. Procédé selon l'une quelconque des revendications 1 à 2, dans lequel la masse fondue obtenue à l'étape b) comprend de 15 à 25 % en poids, plus particulièrement de 19 à 25 % en poids du composé choisi dans le groupe consistant en la pierre calcaire, la dolomite, le gypse, les argiles kaoliniques et les mélanges de ceux-ci.

4. Procédé selon l'une quelconque des revendications 1 à 3, dans lequel la masse fondue comprenant du nitrate d'ammonium fournie à l'étape a) comprend de l'eau, en particulier de 1 à 10 % en poids d'eau, plus particulièrement de 2 à 7 % en poids d'eau.

5. Procédé selon l'une quelconque des revendications 1 à 4, le procédé comprenant l'étape consistant à chauffer la masse fondue obtenue à l'étape c).

6. Procédé selon l'une quelconque des revendications 1 à 5, dans lequel l'étape d) est effectuée sur une masse fondue comprenant de 2 à 4 % en poids d'eau.

7. Composition solide particulaire homogène non explosive comprenant du nitrate d'ammonium, un complexe d'hydroxyde et nitrate de zinc et 10 à 30 % en poids d'un composé choisi dans le groupe consistant en la pierre calcaire, la dolomite, le gypse, les argiles kaoliniques et les mélanges de ceux-ci.

8. Composition solide particulaire homogène non explosive selon la revendication 7 préparée par le procédé selon l'une quelconque des revendications 1 à 6.

9. Composition solide particulaire homogène non explosive selon la revendication 7 ou 8, la composition comprenant au moins 50 % en poids, en particulier au moins 60 % en poids, plus particulièrement au moins 70 % en poids de nitrate d'ammonium.

10. Composition solide particulaire homogène non explosive selon l'une quelconque des revendications 7 à 9, la composition comprenant 0,01 à 5,0 % en poids, en particulier 0,01 à 2,0 % en poids, plus particulièrement 0,05 à 1,0 % en poids du complexe d'hydroxyde et nitrate de zinc.

11. Composition solide particulaire homogène non explosive selon l'une quelconque des revendications 7 à 10, la composition comprenant 15 à 25 % en poids, plus particulièrement 18 à 25 % en poids du composé choisi dans le groupe consistant en la pierre calcaire, la dolomite, le gypse, les argiles kaoliniques et les mélanges de ceux-ci.

12. Composition solide particulaire homogène non explosive selon l'une quelconque des revendications 7 à 11, dans laquelle le complexe d'hydroxyde et nitrate de zinc est Zn₅(NO₃)₂(OH)₈.2H₂O.

13. Composition solide particulaire homogène non explosive selon l'une quelconque des revendications 7 à 12, la composition comprenant au moins 70 % en poids de nitrate d'ammonium, 0,1 à 1,0 % en poids d'un complexe d'hydroxyde et nitrate de zinc et 20 à 25 % en poids de dolomite.

14. Utilisation de la composition solide particulaire homogène non explosive telle que définie dans l'une quelconque des revendications 7 à 13 en tant qu'engrais, en particulier destiné à être utilisé dans des sols carencés en zinc.
